# DEMANDE DE BREVET EUROPEEN

(11) **EP 0 963 131 A1**
(43) Date de publication de la demande: **08.12.1999**
(21) Numéro de dépôt: 99401291.2
(22) Date de dépôt: 31.05.1999
(51) Int. Cl.: H04Q 7/38

(54) **Procédé d'administration d'un réseau de stations de base**

(30) Priorité: 04.06.1998 FR 9807010
(71) Demandeur: ALCATEL, 75008 Paris (FR)
(72) Inventeur: Dupuy, Pierre, 75017 Paris (FR)
(74) Mandataire: El Manouni, Josiane

(57) **Abrégé**

Pour résoudre des problèmes d'occupation de bandes de fréquence, dans un réseau de téléphonie avec des mobiles utilisant un protocole de type GSM, on prévoit d'utiliser une fréquence de balise unique dans une macro-cellule. Dans ces conditions, pour prendre en considération un téléphone mobile qui pénètre dans cette macro-cellule, on repère les fenêtres temporelles libres (TSi) de toutes les cellules (A-J) de la macro-cellule. Au besoin, si une même fenêtre temporelle n'est pas libre dans toutes les cellules, on fait migrer (25-27) les communications établies dans cette cellule vers une fenêtre temporelle libre dans cette même cellule, ou dans une autre cellule. Puis on attribue cette fenêtre temporelle libre au téléphone mobile entrant.

## Description

La présente invention a pour objet un procédé d'administration, par un organe central, d'un réseau de stations de base communiquant avec des téléphones mobiles. L'invention est particulièrement utilisable dans le cadre de la téléphonie mobile, de type GSM, avec utilisation de canaux de balises dits BCCH (Broadcast Control CHannel) comme on en rencontre dans les réseaux de type TDMA (Time Division Multiple Access). Par conséquent l'invention ne s'applique pas aux réseaux de type CDMA (Coded Division Multiple Access), qui ne possèdent pas de canal de balise. Le but de l'invention est d'optimiser les ressources disponibles dans les stations de base de ces réseaux, en réduisant l'occupation en fréquence consacrée aux canaux BCCH des différentes cellules du réseau.

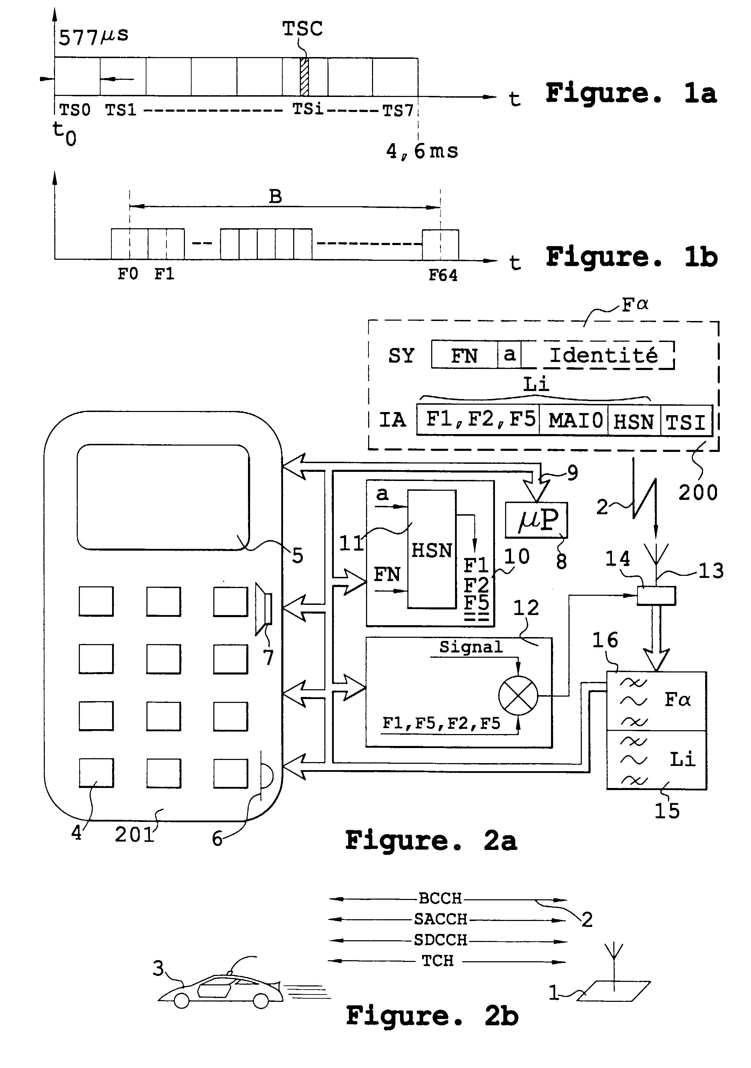

On va montrer à l'examen des figures 1a à 5 suivantes le fonctionnement connu d'un réseau de téléphonie mobile de type GSM. Par la suite on montrera avec ces mêmes figures quelles sont les limites de performance rencontrées par un tel réseau, et quelle est la solution qui leurs est apportée par l'invention.

Les figures 1a et 1b montrent dans le cadre du GSM, respectivement les représentations symboliques d'une trame temporelle GSM et d'une bande de fréquence allouée à un opérateur qui met en oeuvre un tel réseau. En pratique dans un exemple une trame temporelle GSM a une durée d'environ 4,6 millisecondes et est divisée en huit fenêtres temporelles de durée égale à 577 microsecondes. Ces fenêtres temporelles, dites Time Slot (TS0-TS7), sont attribuées à des canaux différents. A chaque canal est associée une fréquence porteuse. La figure 1b montre, pour une bande passante B d'environ 15 MHz attribuée à un opérateur, la possibilité pour ce dernier de répartir plusieurs voies de fréquence. Dans un exemple il y en a 64 qui occupent chacune 200 KHz environ.

En fait, un canal de transmission, s'il est à un instant donné synonyme d'une fenêtre temporelle TSi et d'une fréquence porteuse Fi est cependant associé à une loi de fréquence Li en vertu de laquelle la fréquence pour le canal change d'une trame à la suivante. Ainsi, si plusieurs canaux coexistent, ils peuvent être différenciés par la fenêtre temporelle et/ou la fréquence instantanée de porteuse. Un programme de planification permet d'éviter que deux canaux distincts se développent pour une même trame, dans une même fenêtre temporelle, et avec une même fréquence de porteuse.

Les figures 2a à 4 montrent, en les réduisant aux parties essentielles à l'invention, le principe du saut de fréquence, d'une trame GSM à la suivante. On connaît les raisons de ces sauts en fréquence. Ils ont pour but de répartir des bruits présents préférentiellement sur une bande de fréquence dans plusieurs messages échangés avec le réseau, de manière à ne pas défavoriser complètement un seul message, celui qui emprunterait une bande très bruitée. Cette technique autorise une utilisation sporadique d'une même fréquence Fi dans des cellules voisines. Elle apporte ainsi un gain statistique significatif selon le principe dit de diversité de fréquence comme cela est expliqué dans : "The GSM - Global System for Mobile Communications" produit et publié par M. MOULY et M. B. PAUTET, Editions 1992, pages 218 - 233.

Les figures 2a et 2b montrent le principe du saut en fréquence (hopping) lors de chaque trame. Sur la figure 2b, une station de base 1 émet, sur un canal 2 de balise dit BCCH, en direction d'un mobile 3, un message de synchronisation et d'assignation. La figure 2a montre que le mobile 3 porte un téléphone mobile 201. Le message de synchronisation et d'assignation est montré symboliquement dans un cadre en tirets 200 sur la figure 2a. Ce message 200 a été émis par exemple à une fréquence Fα caractéristique du canal de balise BCCH.

Une partie, SY, du message 200 émis par la station de base 1 concerne la synchronisation. La partie SY comporte elle-même deux parties principales. Une première partie (codée sur 22 bits dans le cadre du GSM) dénommée FN représente un numéro de trame (Frame Number). En pratique ce numéro de trame représente l'heure puisque le numéro des trames évolue avec le temps. C'est donc un signal continûment variable au moins en cours d'une journée ou d'une période assez longue.

Une deuxième partie du signal SY permet à la station de base de s'identifier. La station de base donne ainsi d'une part son identité, codée sur une vingtaine de bits, et d'autre part, elle donne sa couleur. La couleur, ici représentée par le symbole a, comporte sur trois bits une première information dite PLMN (Public Land Mobile Net) représentative, sous une forme réduite, du code de l'opérateur. Ceci permet à un téléphone mobile de savoir, compte tenu d'un abonnement souscrit auprès d'un opérateur par son utilisateur, s'il a à converser et à tenir compte des informations délivrées par la station de base 1. Sur trois autres bits (ce qui offre une possibilité de différenciation modulo 8), la station de base 1 s'identifie en raccourci : elle indique sa couleur a. L'expérience a montré qu'il suffisait, compte tenu des signaux à fréquence Fα reçus, éventuellement de multiples origines, de se satisfaire de ces trois bits pour identifier rapidement la station de base qui émet sur la fréquence balise.

Le fait d'utiliser une couleur permet à deux stations de base, assez éloignées l'une de l'autre, d'utiliser une même fréquence Fα de balise, sans que des téléphones mobiles qui captent ces signaux de balise relèvent une ambiguïté sur la station de base dont ils sont proches. Après transmission à un organe central de la fréquence de balise Fα détectée, et de la couleur à interpréter, l'organe central sait quelle est la station de base captée par le téléphone mobile.

Un canal CCCH (Common Control CHannel) associé au canal BCCH sert à transmettre un signal d'assignation. On appelle ce signal d'assignation IA, comme "lmmediate Assignment". Le signal IA est aussi représenté dans le cadre 200 en tirets. Le signal IA est représentatif d'une assignation d'un canal de communication qui a été attribué au téléphone mobile 201 du mobile 3 pour son trafic avec la station de base 1. Ce message d'assignation IA comporte une indication TSi permettant de déterminer une allocation dans la trame temporelle. Il comporte par ailleurs une indication Li d'une loi de fréquence qui comporte trois arguments principaux. Un premier argument de Li concerne une désignation de porteuses de la bande B. Par exemple on a montré ici qu'il s'agit des porteuses F1, F2 et F5. Le nombre des porteuses peut être un nombre quelconque différent de trois, mais en tous cas plus grand que un. Les porteuses choisies sont situées parmi les soixante-quatre (ou autres) fréquences de la bande B.

Comme deuxième argument de la loi Li, le message IA comporte une indication MAIO (Mobile Allocation ldentity Offset). Le message MAIO est en fait une valeur comprise entre un et n, n étant le nombre de porteuses du premier argument.

Comme troisième argument de la loi Li, le message IA comporte une désignation d'un algorithme HSN (Hopping Sequence Number) d'élaboration de nombres pseudo-aléatoires. Les nombres pseudo-aléatoires produits par l'algorithme HSN sont compris, eux aussi entre 1 et n (ou 0 et n-1), où n est le nombre de porteuses du premier argument.

Le téléphone mobile 201 comporte, en plus de boutons de commande 4, d'un écran 5, d'un microphone 6 et d'un haut-parleur 7, un circuit de commande interne. Ce circuit de commande interne comporte essentiellement un microprocesseur 8, et un bus de communication 9 entre ces divers organes. Le bus 9 permet notamment la communication avec un circuit 10 mettant en oeuvre un algorithme HSN 11 d'élaboration des nombres aléatoires. L'algorithme 11 est paramétré par le signal a, représentatif de la couleur de la station de base qui va gérer le mobile, et par le signal FN représentatif de l'heure et continûment variable.

Dans l'exemple simple représenté dans lequel il y a trois fréquences F1, F2, F5, le résultat disponible à la sortie de l'algorithme 11 est une suite aléatoire de trois symboles par exemple 0, 1 ou 2, désignant des fréquences de porteuses F1, F2, F5. Autrement dit, une fois que le téléphone mobile a reçu le signal IA, son circuit 10 délivre pour chaque trame, aléatoirement, la fréquence Fn qui doit être utilisée comme porteuse pour différencier son canal. Cette fréquence évolue à chaque trame puisque à chaque trame le circuit 11 reçoit par l'intermédiaire du signal SY un nouveau signal FN.

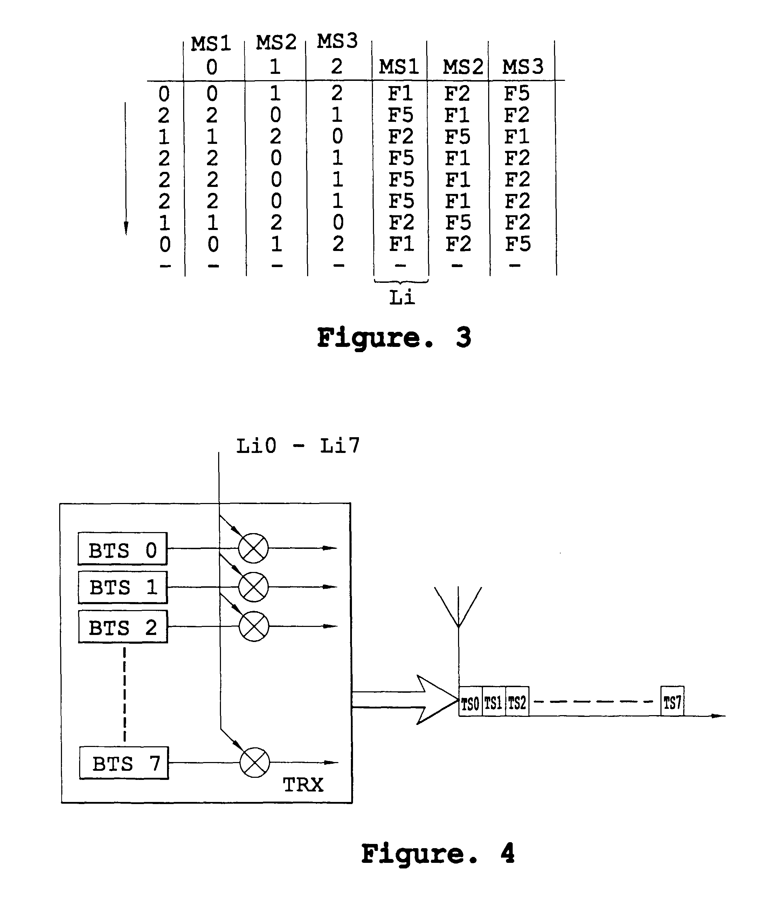

La figure 3 montre l'élaboration, selon une loi de fréquence Li, des désignations aléatoires des porteuses. Dans une première colonne on a montré une suite temporelle de nombres 0, 1 ou 2 produits par l'algorithme 11. On ajoute ensuite la valeur de l'argument MAIO affecté aux mobiles, valeur 0, 1 ou 2, au nombre aléatoire produit par l'algorithme 11. Cette addition est effectuée modulo n (ici donc modulo 3). Par exemple pour un téléphone mobile MS1 pour lequel le nombre MAIO affecté est 0, le numéro de la fréquence relative à l'addition est exactement la même que celui délivré par l'algorithme 11. Pour un deuxième téléphone mobile MS2, affecté d'un rang MAIO de valeur 1, on ajoute 1, modulo 3, à la valeur du nombre aléatoire. De même pour un troisième téléphone mobile MS3 affecté d'un rang MAIO de valeur 2.

Compte tenu de la suite aléatoire représentée, après addition, le résultat attribué au mobile MS1 est 0, 2, 1, 2, 2. Les fréquences attribuées correspondantes sont alors F1, F5, F2, F5, F5,.... Et ainsi de suite pour MS2 et MS3. Cette succession de fréquences porteuses est constitutive de la loi Fi avec laquelle le téléphone mobile 201 va trafiquer avec la station de base 1. Dans un modulateur 12, le signal de parole est alors modulé successivement en fonction des numéros des trames GSM par un signal à une fréquence de modulation F1, F5, F2, F5, F5, ... .

Le signal modulé est émis sur l'aérien 13 du téléphone mobile 201. Un duplexeur 14 permet à l'aérien 3 de servir à la fois pour l'émission et la réception. En réception un récepteur 15 applique la même loi de fréquence Li et après traitement permet l'écoute des messages sur le haut-parleur 7. Un récepteur additionnel 16, centré sur la fréquence Fα de balise lui permet de recevoir les signaux émis sur le canal BCCH 2.

En pratique alors que le trafic normal entre la station de base 1 et le mobile 3 s'effectue sur un canal de trafic TCH (Trafic CHannel), les signaux de Immediate Assignment peuvent lui être transmis par ce canal TCH au lieu d'être transmis sur le canal CCCH associé au canal BCCH. Si le mobile n'est pas en trafic son canal d'échange avec la station de base sera au moment des changements de zones de localisation, un canal dit SDCCH (Stand-alone Dedicated Control CHannel) qui permet de suivre le parcours emprunté par le mobile au cours de son déplacement.

La figure 4 montre la structure interne d'une station de base 1 comprenant huit circuits élémentaires dits BTS0 à BTS7 affectés chacun à une fenêtre temporelle TS0 à TS7. Chacun de ces circuits BTS comporte un modulateur associé dans lequel des signaux de parole sont modulés par une fréquence Fi0 à Fi7 qui elles-mêmes dépendent de lois de fréquence Li0 à Li7 affectées à chacune de ces fenêtres. En effet, une loi Li doit s'appliquer au téléphone mobile 201, à la station de base 1, et pour une fenêtre temporelle I donnée. Pour chaque fenêtre temporelle, il peut y avoir une loi de fréquence différente. Les lois de fréquence Li0 à Li7 peuvent être identiques puisqu'elles correspondent à des fenêtres temporelles séparées.

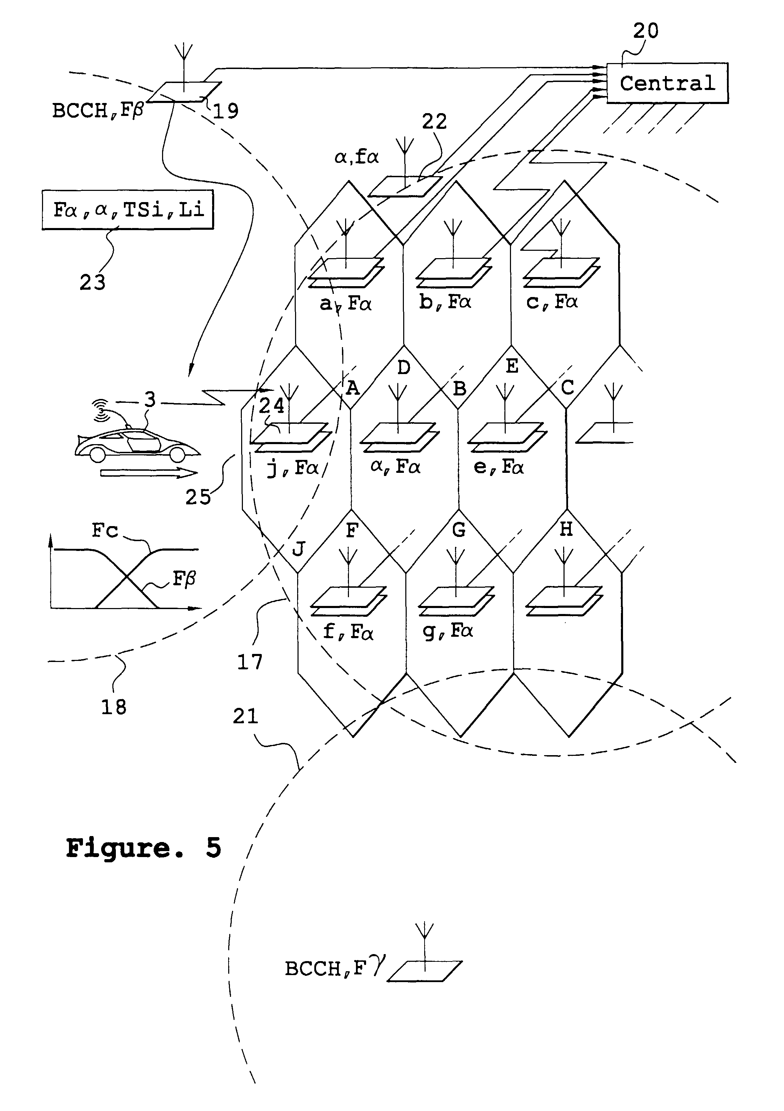

La figure 5 montre un réseau de stations de base dans lequel le problème résolu par l'inventeur va être expliqué. Les stations de base représentées sont contiguës, possèdent des couleurs respectivement a à j et ont chacune un domaine cellulaire de couverture radioélectrique A à J. Les domaines cellulaires A à J peuvent en même temps être couverts, dans un exemple, ensemble par une macro-cellule parapluie 17 dont le rayonnement radioélectrique est plus grand. Le contour 17 de ce rayonnement est montré en tirets. Une station de base 22 gouverne le domaine 17. Toutes ces stations de base sont reliées à un organe central 20 de planification et de commutation.

Dans l'état de la technique, et dans l'utilisation réelle, les fréquences de balise des canaux BCCH de chacune des cellules A à J sont différentes. En conséquence, un mobile 3 qui approche d'une de ces cellules en provenance d'une autre macro-cellule 18, ou d'une autre cellule tout simplement, peut signaler à sa station de base 19 avec laquelle il trafique les désignations et les amplitudes de fréquences de balise des cellules dont il se rapproche. En effet, il capte ces signaux par son récepteur additionnel 16 qui scrute toutes les fréquences de balise possible.

Au moment où un transfert de communication s'avère nécessaire, l'organe central 20 peut alors imposer le transfert de la communication établie entre le mobile 3 et la station de base 19 à une communication à établir entre le mobile 3 et celle des cellules A à J, ou même de la macro-cellule 17, dont le mobile 3 perçoit le mieux les émissions de fréquence de balise. La reconnaissance de cette cellule la plus qualifiée pour l'accueillir est évidente si chaque cellule accueillante utilise une fréquence de balise différente. Un tel mécanisme est par exemple présenté dans le brevet français FR-B-2 724 523.

Cependant, l'utilisation de fréquences de balise individualisées pour chaque cellule heurte la technique de saut de fréquence envisagée précédemment. En effet cette technique de saut de fréquence nécessite de disposer, dans chaque fenêtre temporelle, pour chaque cellule, d'un certain nombre de fréquences libres. Par exemple il fallait trois fréquences, les fréquences F1, F2, F5, pour constituer la loi Li. Compte tenu du nombre de cellules voisines (A à H, soit 10 à 15 cellules pour la macro-cellule 17, et autant pour la macro-cellule 18, et autant encore pour une autre macro-cellule 21 voisine de la macro-cellule 17 et de macro-cellule 18, et ainsi de suite) on peut montrer que l'encombrement en fréquence devient rapidement un problème.

En effet les signaux émis de manière continue aux fréquences de balise Fα sont des brouilleurs pour les canaux de communication TCH utiles des cellules.

L'élaboration d'un tel réseau, avec des fréquences de balise individualisées pour chaque cellule, nécessite donc une planification relativement inextricable et qui le devient de plus en plus au fur et à mesure que la densité des cellules augmente dans un domaine. Elle nécessite par ailleurs de se rendre sur place physiquement, dans les domaines A à J, pour mesurer effectivement les conditions de propagation des voies fréquentielles. Toute cette complexité est due à l'occupation en fréquence des différentes fréquences de balise dans les macro-cellules 17, 18 et 21 et autres. Dans l'utilisation réelle c'est néanmoins cette technique qui prévaut.

Il a été imaginé et testé, notamment dans le cadre du brevet français cité ci-dessus ainsi que dans celui de la demande de brevet européen EP-A-0 504 122, un procédé dans laquelle dans une macro-cellule 17 il n'y a plus qu'une seule fréquence de balise Fα. C'est cette représentation qui est montrée sur la figure 5 où la station de base parapluie 22 émet un message de supervision sur un canal BCCH à la fréquence de balise Fα. Chacune des stations de base de domaine A à J du domaine 17 peut émettre, ou non (et dans ce cas elles ne font qu'écouter), un message de supervision à la fréquence unique commune Fα. Ou bien même, la station de base 22 n'émet pas, mais toutes les stations de base des domaines A à J émettent un même message de supervision. Les synchronisations en émission ou en répétition des messages de supervision sont assurées par l'organe central 20. L'avantage immédiat de ce procédé est de laisser disponible des fréquences de balise inemployées. Les fréquences disponibles peuvent servir de canaux de type TCH pour des échanges entre les stations de base et les différents mobiles.

Dans les documents cités ci-dessus il a été imaginé des systèmes par lesquels les différentes cellules A à J se transmettaient les communications des mobiles qui circulent d'une cellule à l'autre. Pour simplifier, un message HO d'assignation pour "Hand Over", de type du message IA, est utilisé pour assigner de nouvelles lois de fréquence. Ce message HO est relatif à un transfert de communication, il est transmis au mobile 3 par la station de base avec lequel le mobile était précédemment en relation, avant qu'il ne la quitte, et sur instruction de l'organe central 20. Le message HO est transmis via le canal TCH de communication de ce mobile 3 avec cette station de base quittée. Il n'y a donc pas d'utilisation du canal de balise BCCH à Fα pour ces transferts. Comme le message HO est transmis sur le canal TCH en employant à cet effet, une fois, une fenêtre temporelle, il n'y a pas besoin du canal BCCH pour la cellule elle-même.

De même, ces documents règlent la question des mobiles qui étaient en sommeil et qui sont soit sollicités par un appel entrant ou qui eux-mêmes sollicitent une station de base dans le cadre d'un appel sortant (au moment où l'utilisateur du téléphone mobile veut lui-même appeler un autre utilisateur). Dans ce cas les transactions utilisent d'une manière connue les canaux dits CCCH ou PCH (Paging CHannel) internes à la cellule où ils se trouvent.

Par contre, aucun de ces documents n'a prévu le cas des mobiles 3 qui proviennent d'une autre macro-cellule 18 dans laquelle la fréquence balise Fβ est justement différente de la fréquence balise Fα de la macro-cellule 17 dans laquelle le mobile 3 pénètre.

Le mobile 3 qui s'éloigne d'une macro-cellule 18 (ou d'une cellule tout simplement) voit décroître en qualité le message de balise Fβ de la cellule qu'il quitte. Par contre, il voit croître en qualité le message de balise Fα de la macro-cellule 17 dont il se rapproche. Le mobile 3 transmet des informations correspondantes à une station de base 19. En conséquence la station de base 19 va prévenir l'organe central 20 de ce qu'une des cellules d'une autre macro-cellule (à priori on ne sait pas encore qu'il s'agit de la macro-cellule 17) devra gérer la communication avec le mobile. Là se pose un problème qui n'est pas résolu dans l'état de la technique.

En effet alors que le dessin de la figure 5 montre que le mobile va pénétrer par l'intermédiaire de la cellule J dans le domaine 17, dans la pratique on ne sait pas du tout ni quel est le domaine d'accueil, ni quelle est parmi les cellules A à J de ce domaine d'accueil, la cellule J que le mobile va détecter puisque toutes les cellules A à J émettent un même signal de supervision à la fréquence de balise Fα (quand elles en émettent un). Notamment, la représentation connexe des cellules de la figure 5 n'est pas représentative de la réalité. Par exemple une cellule A, D ou F correspondra à une rue, alors qu'une cellule quittée de la macro-cellule 18 correspondra à un couloir du métropolitain. Ce couloir débouche à l'air libre dans le domaine de la cellule J. La cellule J a dans ce cas une grande imbrication dans les cellules connexes A, D, F d'accueil. De ce fait, les domaines de couverture radioélectrique ne sont pas aussi simplement identifiés que ce qui est montré. Ainsi, la cellule J peut tout aussi bien se trouver au milieu du maillage A à H. On utilisera néanmoins le terme de périphérie pour désigner une telle cellule J dans le sens où cette cellule est une cellule par laquelle transitent physiquement et obligatoirement les mobiles qui quittent une macro-cellule 18 dont la fréquence balise Fβ est différente de la fréquence de balise Fα dans la macro-cellule 17.

Le message HO transmis par la station de base 19 au mobile 3, avant de l'abandonner à son sort, pour ses communications avec une des cellules de la macro-cellule 17, doit comporter la désignation d'une loi de fréquence Li et d'une fenêtre TSi. Ce message HO est transmis au mobile 3 simultanément avec l'instruction donnée à toutes les stations de base de la macro-cellule 17 de se préparer à accueillir le mobile 3 qui entre sous leur couverture. Autrement dit, pour un seul mobile entrant, on est obligé de neutraliser un canal TCH dans chacune des cellules de la macro-cellule 17. Autrement dit, le coût d'un mobile entrant en terme de réservation de ressource est excessivement onéreux. En effet, avec des équipements TRX comme ceux montrés sur la figure 4, on doit réserver un circuit BTS dans chaque station de base pour recevoir le transfert. S'il y a 15 cellules, on va neutraliser 15 circuits BTS alors qu'un seul va être utile. En outre, on comprend facilement que si on veut autoriser en permanence l'entrée simultanée de huit téléphones mobiles, le transmetteur TRX avec huit voies devient totalement indisponible pour assurer les communications des mobiles qui trafiquent déjà. Dans ce cas l'équipement de la figure 4 doit être augmenté, par exemple doublé, pour assurer huit communications. Dans l'utilisation normale, une station de base ne comporte qu'un transmetteur TRX, quelques fois elle en comporte deux. On mesure ainsi les conséquences en termes de coût de la gestion du transfert des communications des mobiles entrant dans la macro-cellule 17.

Autrement dit le problème à résoudre par l'invention est celui de l'augmentation du taux d'acceptation des mobiles entrant dans la macro-cellule 17 dans laquelle on a choisi un canal BCCH unique (émettant sur une fréquence balise Fα unique) pour, par ailleurs, rendre plus facile la planification des sauts en fréquence (dont l'avantage technologique est par ailleurs indéniable).

La diffusion d'un message sur une fréquence de balise est en effet pénalisante parce que, pour des cellules voisines de l'émetteur de balise, qui capteraient ce message de balise, ce message de balise est équivalent à un brouilleur parfait, impossible à évacuer dans la bande de fréquence de cette fréquence balise. En conséquence la gamme de fréquence de balise doit être neutralisée pour les fréquences disponibles par saut de fréquence.

Dans l'invention on se situe donc dans le cadre d'une macro-cellule avec une fréquence de balise commune pour un canal BCCH.

Dans l'invention pour résoudre ce problème de neutralisation inutile de circuits BTS dans toutes les cellules A à J, on exploite l'occupation des fenêtres temporelles. En effet, à un moment donné, compte tenu du trafic existant, il est possible que toutes les fenêtres temporelles ne soient pas toutes utilisées simultanément. Dans la plupart des cas il y a au moins une fenêtre temporelle libre, voire deux ou plus, dans une station de base. L'idée de l'invention est alors de faire en sorte que la fenêtre temporelle libre dans toutes les stations de base soit la même. De cette façon l'organe central 20 peut élaborer un ordre HO comportant la désignation TSi de la fenêtre temporelle disponible. Toutes les stations de base se préparent alors à recevoir la communication du mobile entrant dans cette fenêtre TSi. Cette fenêtre disponible peut être quelconque, et notamment évoluer au cours du temps.

L'élaboration comporte deux phases. Une première phase consiste à évaluer l'occupation des fenêtres temporelles. Si une fenêtre TSi est déjà disponible partout, cette fenêtre temporelle TSi est assignée au mobile pénétrant. Si ce n'est pas le cas, l'évaluation comporte la détermination de la fenêtre temporelle la moins employée. Alors, dans une deuxième phase, l'organe central 20 organise la migration des communications établies dans cette fenêtre temporelle la moins employée vers d'autres fenêtres temporelles libres dans les cellules concernées. Une fois cette migration réalisée, l'organe central 20 peut faire envoyer l'ordre HO en y imposant la fenêtre temporelle libérée. Toutes les cellules sont alors susceptibles d'accueillir le mobile, mais sans y avoir, a priori, destiné un circuit BTS spécifique.

L'invention a donc pour objet un procédé d'administration par un organe central d'un réseau de stations de base communiquant avec des téléphones mobiles dans lequel
- des domaines cellulaires, à l'intérieur d'un domaine d'une première macro-cellule, sont gouvernés chacun par une station de base et possèdent en commun un canal BCCH de synchronisation,
- sur le canal BBCH est émis continûment, à une fréquence de balise commune, un signal de synchronisation de toutes les stations de base des cellules de cette première macro-cellule,
- les stations de base de cette première macro-cellule trafiquent avec des téléphones mobiles dans des canaux de trafic aménagés avec des allocations de fenêtres temporelles et de lois de fréquence calées sur ce signal de synchronisation délivré par ce canal BCCH,
- une communication d'un téléphone mobile en trafic avec une station de base d'une deuxième macro-cellule, et pénétrant dans le domaine de la première macro-cellule, est transférée à une station de base de cette première macro-cellule par un ordre comportant une assignation d'un protocole d'entrée en communication avec une station de base de la première macro-cellule,
caractérisé en ce que l'organe central
- mesure un taux d'emploi des fenêtres temporelles,
- détermine une fenêtre temporelle la moins employée, et
- configure le protocole d'entrée pour qu'il emploie la fenêtre temporelle la moins employée.

L'invention sera mieux comprise à la lecture de la description qui suit et à l'examen des figures qui l'accompagnent. Celles-ci ne sont données qu'à titre indicatif et nullement limitatif de l'invention. Les figures montrent :
Figure 1a à figure 5 : les diagrammes déjà commentés permettant de situer à la fois l'état de la technique, le problème présenté, et la solution de l'invention;
Figure 6 : une représentation schématique de la mesure du taux d'emploi des fenêtres temporelles et de la manière de déterminer la fenêtre temporelle la moins employée ;
Figure 7 : une représentation d'un mode le plus complet de configuration d'un protocole d'entrée pour employer une fenêtre temporelle rendue disponible.

Un réseau est dit synchronisé lorsque toutes les cellules possèdent une référence temporelle commune, éventuellement avec décalage. Un réseau avec canal BCCH commun est obligatoirement un réseau synchronisé. Un réseau asynchrone, ou non synchronisé, est un réseau dans lequel le signal de numéro de trame FN est dépendant de chaque cellule. Un réseau peut par ailleurs être synchronisé même si chaque cellule possède son propre canal BCCH avec sa propre fréquence de balise. Il suffit que les signaux FN de trame soient les mêmes, et délivrés au même moment. L'invention concerne donc les réseaux synchronisés.

Quand il y a un arrangement de micro-cellules dans une macro-cellule, en général la macro-cellule est une macro-cellule parapluie rayonnant globalement dans l'espace de toutes les micro-cellules et éventuellement dans des espaces entre micro-cellules non couverts par ces micro-cellules. Typiquement l'aérien de rayonnement d'une macro-cellule est située au-dessus des toits des maisons d'une agglomération, alors que l'aérien des micro-cellules est situé en dessous de la hauteur des toits, par exemple en façade de maison pour constituer une cellule par propagation des émissions le long d'une rue, avec réflexion le long de ces façades. Des micro-cellules sont ainsi par ailleurs destinées à assurer les communications à des carrefours. Dans ce cas leurs ondes se propagent dans toutes les voies de circulation aboutissant aux carrefours.

Dans les systèmes avec balise individualisée par cellule, le téléphone mobile écoute les différents signaux émis aux différentes fréquences de balise et transmet à la station de base avec laquelle il est en relation les différents niveaux et qualités des messages aux fréquences balises reçus. Les stations de base transmettent les informations correspondantes à l'organe central 20 qui organise, en cas de besoin, les transferts.

Dans le cas où il y aurait un canal BCCH unique, avec une fréquence de balise unique, un téléphone mobile ne peut distinguer dans les signaux reçus sur le canal de balise leur provenance. Dans ce cas, la charge de l'écoute est transposée sur les stations de base. Ces stations de base sont alors chargées d'écouter tous les mobiles situés dans leur environnement et qu'elles reçoivent. Dans ce but, la partie centrale d'un message de parole échangé entre un téléphone mobile quelconque et sa station de base sur un canal TCH comporte une information TSC (figure 1a) sur l'identité du téléphone mobile (ou de la communication en cours). Ces informations d'identités sont transmises à l'organe central 20 qui, là encore, attribue les communications aux différentes stations de base en fonction du besoin et organise la gestion générale des communications dans la macro-cellule. Ce type de fonctionnement est identique dans l'invention de ce qu'il est dans l'état de la technique. Notamment, les stations de base reçoivent de l'organe central 20 un ordre d'écouter le trafic des téléphones mobiles en communication avec des stations de bases voisines. Cet ordre comporte pour chaque téléphone mobile à écouter la désignation de sa fenêtre temporelle (TSi), de sa loi de fréquence (Fi), et de son identité (TSC). Les stations de base écoutent les communications établies par leurs voisines. Elles mesurent la qualité des signaux reçus et attribuent ces résultats aux téléphones mobiles respectifs. Puis, elles transmettent les résultats qualitatifs de ces écoutes à l'organe central pour que celui-ci administre le réseau en conséquence.

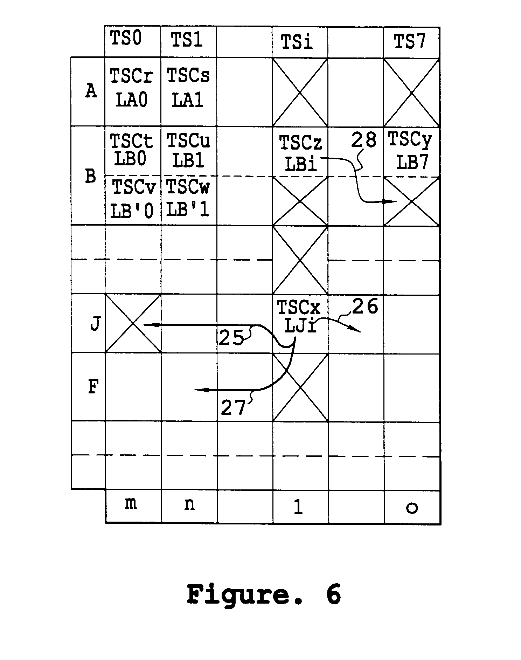

La figure 6 montre, sous forme d'une table, les principes de mesure du taux d'emploi des fenêtres temporelles et de la détermination de la fenêtre temporelle la moins employée. La table de la figure 6 comporte des enregistrements (présentés horizontalement) correspondant à chacune des stations de base de la macro-cellule 17. Par exemple on a représenté, au moins pour cette macro-cellule 17, des enregistrements correspondants à la cellule A, à la cellule B et la cellule J. Ces enregistrements comportent chacun une série d'informations de même type. Ces informations de même type sont affectées à des fenêtres temporelles TS0 à TS7. Ces informations de même type renseignent sur l'identité TSC d'un téléphone mobile qui trafique dans la fenêtre temporelle concernée, et sur la loi L de fréquence respectée pour ce trafic. Ainsi pour la cellule A dont l'équipement de la station de base correspond typiquement à la représentation de la figure 4, pour la fenêtre temporelle TS0, l'enregistrement de la table de la figure 6 dans les mémoires de l'organe central 20 révèle que cette fenêtre temporelle est utilisée par un mobile r, TSCr, respectant une loi LA0. De même la fenêtre temporelle TS1 pour la même cellule A sert pour un téléphone mobile d'identité TSCs, respectant une loi LA1. Cet enregistrement montre également qu'une fenêtre temporelle TSi n'est pas occupée, pour la station de base A, par le trafic avec aucun téléphone mobile.

En ce qui concerne une deuxième station de base, la station de base B, celle-ci assure dans la fenêtre temporelle TS0, le trafic d'un mobile identifié TSCt selon une loi LB0 de même que, pendant la fenêtre temporelle TS1, le trafic d'un mobile identifié TSCu avec une loi de fréquence LB1. En regard des enregistrements de la cellule B figure néanmoins la désignation de canaux de fréquence supplémentaires. On a représenté ainsi que dans la fenêtre temporelle TS0 le trafic d'un mobile TSCv était assuré selon une loi de fréquence LB'0, alors que le trafic d'un mobile TSCw était assuré avec une loi de fréquence LB'1 pendant la fenêtre temporelle TS1. En se reportant à la figure 4, ceci signifie que pour l'équipement de la station de base B, deux circuits BTS supplémentaires (au-delà des huit) ont été réalisés. Soit ces deux circuits supplémentaires sont affectés d'une manière définitive à des fenêtres temporelles (TS0, TS1) soit ces deux circuits BTS supplémentaires peuvent être affectés à des fenêtres temporelles choisies à la demande. En pratique les stations de base comportent de préférence des groupes de huit circuits BTS affectés définitivement aux huit fenêtres temporelles.

Ainsi de suite chacune des stations de base de la macro-cellule 17, ou des macro-cellules 18 ou 21, transmet à l'organe central 20 les états de ses occupations de fenêtres temporelles, associés à des lois de fréquence. Pour compléter, on a indiqué en ce qui concerne la cellule J que celle-ci assurait le trafic avec un mobile d'identité TSCx selon une loi de fréquence LJi pendant la fenêtre temporelle TSi.

Comme cela a été indiqué précédemment, au moment où un mobile 3 s'approche de la macro-cellule 17, il constate qu'il reçoit de moins en moins bien les émissions du message à la fréquence de balise de la macro-cellule 18. Une requête en transfert de communication avec une cellule de la macro-cellule 17 (ou d'une autre) est envoyée à l'organe central 20. Ceci est représenté, figure 5, où la qualité de signal à la fréquence balise Fβ décroît alors que la qualité du signal de balise à la fréquence Fα croît.

L'organe central 20 doit alors étudier, selon l'invention, le taux d'emploi des fenêtres temporelles. D'une part, l'organe central 20 sait déjà que les cellules de la macro-cellule 17 vont être concernées car la requête en transfert de communication comporte l'information selon laquelle les messages de synchronisation transmis à la fréquence de balise Fα sont bien reçus. Il peut donc cantonner cette étude aux stations de base des cellules de la macro-cellule 17. Soit, comme c'était le cas pour les stations de base A et B, la fenêtre temporelle TSi est inemployée pour toutes les stations de base de la macro-cellule 17. Dans ce cas, l'organe central 20 désigne la fenêtre temporelle TSi et lui affecte une loi de fréquence compatible Li. Le canal TCHi (Tsi, Li) ainsi déterminé est communiqué à la station de base 19, en complément de l'indication de fréquence de balise Fα et éventuellement d'une couleur α de la station de base (de la station de base parapluie 22 ou d'une autre) qui est chargée de distribuer le message de synchronisation FN.

La station de base 19 envoie alors un ordre HO 23 au mobile 1. L'ordre 23 comporte la désignation de la fréquence de balise Fα, la désignation de la couleur α, et l'indication de la réservation de la fenêtre temporelle TSi et de la loi de fréquence Li. Dans la trame suivante le mobile 3 émet alors ses signaux de parole dans la fenêtre temporelle TSi en respectant la loi de fréquence Li calée sur le signal de synchronisation qu'il reçoit selon le canal de balise à la fréquence Fα. Dans ces conditions, toutes les cellules A à H de la macro-cellule 17 sont mises en attente de réception. L'une d'entre elles, celle qui reçoit le mieux le trafic du mobile 3, la station de base 24 de la cellule J par exemple, affecte le canal TCHi, correspondant à la fenêtre temporelle TSi et à la fréquence Li, à la communication avec ce mobile 3.

Le problème est différent si, comme montré sur la figure 6 une des cellules au moins utilise déjà la fenêtre temporelle Tsi, et que ceci conduise à ce que l'occupation de chaque fenêtre temporelle soit réalisée. En ce qui concerne la fenêtre temporelle TSi on a montré qu'un mobile d'identité TSCx y trafiquait en respectant une loi de fréquence LJi. La mesure du taux d'emploi des fenêtres temporelles consiste à additionner, en dessous de chaque colonne de la table le nombre de communications qui occupent les fenêtre temporelles.

Ainsi, pour la colonne correspondant à la fenêtre temporelle TS0, on devra compter une unité pour le trafic du mobile TSCr dans la cellule A. Par contre pour la cellule B, on devra compter également une unité bien que deux mobiles, les mobiles TSCt et TSCv y trafiquent ( mais avec deux lois de fréquence différentes et compatibles, LB0, et LB'0, et avec deux circuits BTS en plus). En effet, ce qui doit être compté est, non pas le nombre total de communications assurées dans une fenêtre temporelle dans une cellule, mais le nombre de communications assurées dans une fenêtre temporelle dans une cellule qu'il faut faire migrer pour libérer au moins un canal dans la fenêtre temporelle dans cette cellule. Ainsi on a montré à la fenêtre temporelle TS7 que si un circuit BTS du transmetteur TRX de la cellule B était occupé pour assurer les communications avec le mobile TSCy, l'autre circuit BTS était disponible. Par conséquent, pour la fenêtre temporelle TS7, la station de base B compte pour 0. Ainsi de suite on évalue en fait le nombre de communications qu'il faudra faire migrer pour rendre libre une fenêtre temporelle.

On a également montré pour la cellule B, que dans la fenêtre temporelle TSi un mobile d'identité TSCz y trafiquait avec une loi de fréquence LBi. Toutefois un autre canal y reste disponible dans la fenêtre TSi. Donc la station de base B compte aussi pour 0 pour la fenêtre temporelle TSi.

Une fois faites les évaluations d'occupation, on peut évaluer le taux d'occupation minimal. Supposons par exemple qu'il s'agisse de la fenêtre temporelle TSi, dans laquelle un mobile TSCz trafique avec la station de base de la cellule B alors qu'un autre mobile TSCx trafique avec la station de base de la cellule J. L'idée de l'invention est de faire migrer ces deux communications vers des canaux voisins disponibles, mais si nécessaire seulement.

Par exemple, il apparaît nécessaire, étant donné que la cellule J ne possède qu'un circuit BTS sur la fenêtre temporelle Tsi, de faire migrer par une migration 25 ou 26 la communication avec le mobile TSCx. De préférence la migration de la communication avec le mobile TSCx sera organisée dans la même cellule J. De ce fait il sera nécessaire que la cellule J possède au moins une fenêtre temporelle disponible. Par exemple elle possède la fenêtre disponible TS0.

Si ce n'est pas le cas, si toutes les fenêtres temporelles de la station de base de la cellule J sont occupées, on pourra envisager de faire migrer la communication vers une fenêtre temporelle d'une cellule voisine, par exemple la cellule F par une migration 27. La reconnaissance de ce que la cellule F sera candidate à cette migration sera obtenue par une mesure effectuée par la station de base de la cellule F des communications échangées à l'intérieur de la cellule J et qui montrent que cette cellule F est capable d'assurer la communication avec l'un au moins des mobiles trafiquant avec la cellule J. Soit la cellule F dispose par ailleurs d'une fenêtre temporelle pour accueillir directement le mobile TSCx, et dans ce cas on organisera la migration 27. Soit cela ne sera pas le cas, et on provoquera alors simultanément une migration de la communication d'un autre mobile trafiquant dans la cellule F, pour lequel c'est possible, et la migration de la communication du mobile TSCx avec la place libérée par ce mobile dans la cellule J.

En ce qui concerne la station de base B, on a pu constater qu'elle laissait disponible un canal à la fenêtre temporelle TSi. Cependant cette condition peut ne pas être suffisante pour autoriser l'installation du mobile 3 pénétrant dans la macro-cellule 17 sur la fenêtre temporelle Tsi. En effet, il faut également indiquer au mobile 3 une loi de fréquence Li. Il faut alors vérifier que la loi Li attribuée au mobile pénétrant est différente de la loi LBi respectée par le mobile TSCz. Le cas échéant par une migration 28 il faudra commuter préalablement la communication dans la fenêtre temporelle TSi avec le mobile TSCz à une autre fenêtre TS7.

Sur la figure 6, on a donc représenté une ligne de somme dans laquelle sont stockées en permanence les mesures m, n, ..., 1, ..., o, des taux d'emploi des fenêtres temporelles. Selon ce qui a été dit précédemment, le taux d'emploi de la fenêtre TSi serait à un instant donné de 1, sous réserve de vérification que la loi de fréquence attribuée Li sera différente de la loi de fréquence LBi. Ce cas est peu probable compte tenu de ce que la loi de fréquence elle-même peut être facilement différenciée en attribuant au mobile qui rentre un indice MAO différent de celui du mobile d'identité TSCz.

Dans ces conditions, il est possible à l'organe central 20 de faire transmettre l'ordre 23 au mobile 3

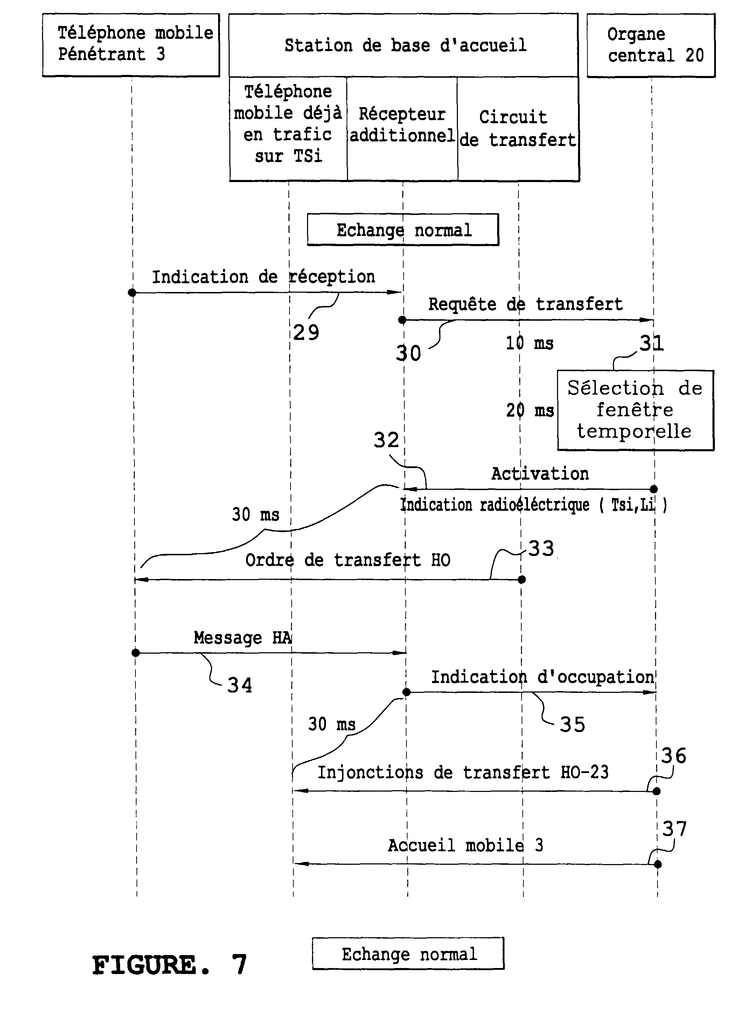

La figure 7 montre les opérations effectuées pour aboutir à l'acceptation du mobile 3 pénétrant. Au cours d'une étape 29, le mobile 3 indique les qualités de réception des émissions de la station de base 19 et des autres stations de base qu'il capte. Constatant la dégradation de la qualité de la communication entre elle et le mobile, la station de base 19 transmet alors à l'organe central 20 une requête 30 de transfert. Cette opération ultérieure 30 dure dans un exemple de l'ordre de 10 ms. Au cours d'une étape 31 suivante, l'organe central 20 effectue la sélection expliquée au regard de la figure 6. Compte tenu de l'évaluation permanente, et préalable, effectuée par l'organe central 20, cette sélection de fenêtre temporelle disponible est très courte, elle dure de l'ordre de 20 ms.

Au cours d'une étape suivante 32, l'organe central 2 active la fenêtre temporelle TSi dans toutes les stations de base susceptibles de recevoir le mobile 3. Sont donc également concernés les stations de base B et J qui gèrent déjà une communication dans cette fenêtre temporelle TSi. Cette activation consiste à faire écouter le mobile 3 par les stations de base. Au cours de cette étape 32, l'organe central 20 indique également à la station de base 19 la définition radioélectrique retenu (TSi, Li).

Au cours d'une étape 33 ultérieure, la station de base 19 envoi un ordre HO 23 au mobile 3 avec les indications définies (TSi, Li). Au cours d'une étape 34 suivante, le mobile 3 qui a reçu l'ordre HO 23, envoie des messages "Handover Access" HA. Ces messages HA sont reçus par toutes les stations de base de son environnement, dont B et J. Ces messages HA comportent une indication que la fenêtre temporelle TSi et la loi Li sont déjà prévues pour le mobile 3 pour une future communication avec une autre station de base. Au cours d'une étape encore ultérieure 35, les stations de base, dont B et J, transmettent le niveau et la qualité de réception de ce message HA. De plus les stations B et J transmettent une information d'occupation à l'organe central 20. L'information d'occupation montre que la fenêtre temporelle TSi est totalement (ou partiellement) occupée pour elles. L'ensemble des opérations 32 à 35 dure environ 50 ms. De ce fait l'organe central 20, qui a déjà préconisé l'utilisation de la fenêtre TSi (parce qu'elle était la moins occupé), va provoquer la libération de cette fenêtre temporelle TSi, mais, seulement pour B et J qui ont indiqué d'une part qu'elles étaient des candidates valables pour accueillir le mobile 3 et d'autre part que cette fenêtre temporelle TSi était occupée chez elle.

En agissant ainsi on évite de devoir déplacer des communications des mobiles qui utiliseraient cette fenêtre temporelle TSi, mais pour leur communication avec une autre station de base qui, elle, n'est pas une candidate valable pour accueillir le mobile 3 (parce qu'essentiellement le niveau de réception des émissions de ce mobile 3 est trop faible pour elles). De même, cette manière d'agir permet ainsi, si la fenêtre temporelle TSi est libre partout dès le départ, de provoquer l'accueil du mobile 3 dans cette fenêtre temporelle sans difficulté. Si comme cela a été expliqué, la fenêtre temporelle TSi n'est pas disponible, l'organe central 20 émet alors, en une étape 36, une ou des injonctions de transfert. Les stations de base B et J reçoivent ainsi ces injonctions et émettent, simultanément, à l'adresse des mobiles TSCz et TSCx respectivement les ordres de transfert HO vus précédemment. A l'issue de l'étape 36, on est assuré que la fenêtre temporelle TSi (avec une loi de fréquence Li) est disponible dans toutes les stations de base de la macro-cellule qui sont concernées par l'accueil du mobile 3.

Dans une étape 37 consécutive, l'organe central 20 envoie enfin un ordre d'acceptation du nouveau téléphone mobile 3. Cette acceptation est envoyée à la station de base 19 et aux stations B et J. Le mobile termine alors sa connexion comme dans l'état de la technique.

On rappelle que la norme impose une durée maximale approximative de 320 ms pour accueillir le mobile entrant 3. Les indications données ci-dessus montrent que le procédé de l'invention y satisfait.

Les ordres HO de transfert sont de préférence transmis aux mobiles par le canal TCH avec lequel ils communiquent avec leur station de base précédente, avant de quitter ce canal pour un autre canal. La station de base 19 envoie ainsi un message de commutation au mobile 3. Dès qu'il reçoit ce message le mobile 3 commute. La seule commutation que doit effectuer le mobile 3 consiste à modifier d'une part sa loi de fréquence, et d'autre part sa fenêtre temporelle. La station de base 19 quittée, quant à elle, cesse d'assurer la liaison avec le mobile 3. Par contre, les stations de base A-H ont été prévenues au cours de l'étape 32 par l'organe central 20 qu'elles avaient à surveiller la liaison avec le mobile 3.

Pour l'établissement de la liste de la figure 6, on peut prendre en considération toutes les cellules de la macro-cellule 17. De préférence, en ce qui concerne la gestion de mobiles entrants, on ne retiendra que les cellules périphériques. Par exemple on ne retiendra que les cellules A, B, C, J, F, G et H, mais pas les cellules D et E qui sont situées géographiquement à l'intérieur de la macro-cellule 17. Plus généralement, on ne retiendra que les cellules qui ont une chance d'être les premières, dans la macro-cellule 17, à entrer en relation avec un mobile.

De même, pour la détermination de la fenêtre temporelle la moins employée, on pourra exclure une fenêtre temporelle. On pourra ainsi l'exclure soit parce qu'elle est affectée à un mobile prioritaire (pompier, police) et qu'il ne faut pas risquer de déranger sa communication. On pourra aussi l'exclure parce qu'elle est, du fait d'un traitement temporairement effectué dans une macro-cellule, momentanément indispensable.

De même la liste peut être soit une liste globale soit une liste affectée à la macro-cellule 17 (par correspondance à la fréquence de balise Fα). Dans ce dernier cas, il y aura autant de listes qu'il y a de macro-cellules.

## Revendications

1. Procédé d'administration par un organe central d'un réseau de stations de base communiquant avec des téléphones mobiles dans lequel
- des domaines cellulaires (A-H), à l'intérieur d'un domaine (17) d'une première macro-cellule, sont gouvernés chacun par une station de base et possèdent en commun un canal BCCH (Fα) de synchronisation,
- sur le canal BBCH est émis continûment, à une fréquence de balise commune, un signal (SY) de synchronisation de toutes les stations de base des cellules de cette première macro-cellule,
- les stations de base de cette première macro-cellule trafiquent (TCHi) avec des téléphones mobiles dans des canaux de trafic (TSi, Li) aménagés avec des allocations de fenêtres temporelles et de lois de fréquence calées sur ce signal de synchronisation délivré par ce canal BCCH,
- une communication d'un téléphone mobile (3) en trafic avec une station de base (19) d'une deuxième macro-cellule, et pénétrant dans le domaine de la première macro-cellule, est transférée à une station de base de cette première macro-cellule par un ordre (HO) comportant une assignation d'un protocole d'entrée en communication avec une station de base de la première macro-cellule,
caractérisé en ce que l'organe central
- mesure (m, n, o) un taux d'emploi des fenêtres temporelles,
- détermine une fenêtre temporelle (TSi) la moins employée, et
- configure (32) le protocole d'entrée pour qu'il emploie la fenêtre temporelle la moins employée.

2. Procédé selon la revendication 1, caractérisé en ce que
- pour configurer le protocole d'entrée, on transfère (36) les communications des téléphones mobiles qui trafiquent déjà avec une station de base attribuée dans la fenêtre temporelle la moins employée.

3. Procédé selon la revendication 2, caractérisé en ce que
- pour transférer les communications, on les attribue (25, 26) à la même station de base attribuée, ou à une autre station (27) de base que celle avec laquelle ils trafiquent déjà, mais avec une fenêtre temporelle différente et, éventuellement, une loi de fréquence différente.

4. Procédé selon l'une des revendications 1 à 3, caractérisé en ce que
- pour mesurer et ou déterminer, on ne prend en compte que des stations de base prédéterminées (17) dans une liste de stations de base périphériques.

5. Procédé selon l'une des revendications 1 à 4, caractérisé en ce que
- pour mesurer et ou déterminer, on élimine une fenêtre temporelle (TSi) pour laquelle une communication d'un téléphone mobile qui l'emploie ne peut être transférée vers une fenêtre temporelle libre de la station de base avec laquelle il trafique ou d'une autre station de base.

6. Procédé selon l'une des revendications 1 à 5, caractérisé en ce que
- on mesure et ou on détermine périodiquement la fenêtre temporelle la moins employée.

7. Procédé selon l'une des revendications 1 à 6, caractérisé en ce que
- les stations de base reçoivent de l'organe central un ordre d'écouter le trafic des téléphones mobiles en communication avec des stations de base voisines,
- cet ordre comporte pour chaque téléphone mobile à écouter la désignation de sa fenêtre temporelle (TSi), de sa loi de fréquence (Fi), et de son identité (TSC),
- les stations de base écoutent les communications établies par leurs voisines,
- mesurent la qualité des signaux reçus, attribuent ces résultats aux téléphones mobiles respectifs, et
- transmettent les résultats qualitatifs de ces écoutes à l'organe central pour que celui-ci administre le réseau en conséquence.

8. Procédé selon l'une des revendications 1 à 7, caractérisé en ce que
- une première station de base transmet, sur le canal de trafic (TCH) qu'elle utilise avec un téléphone mobile, une assignation d'un protocole de communication de ce téléphone mobile avec une deuxième station de base pour tenir compte du déplacement de ce téléphone mobile par rapport à cette première station de base.
